(19) Europäisches Patentamt
European Patent Office
Office européen des brevets

(11) **EP 3 434 439 B1**

(12) **EUROPEAN PATENT SPECIFICATION**

(45) Date of publication and mention
of the grant of the patent:
**09.12.2020 Bulletin 2020/50**

(51) Int Cl.:
***B29C 45/46*** *(2006.01)*      ***B29C 45/76*** *(2006.01)*
***B29C 45/50*** *(2006.01)*

(21) Application number: **17770324.6**

(22) Date of filing: **23.03.2017**

(86) International application number:
**PCT/JP2017/011642**

(87) International publication number:
**WO 2017/164284 (28.09.2017 Gazette 2017/39)**

(54) **INJECTION MOLDING MACHINE**

SPRITZGIESSMASCHINE

MACHINE DE MOULAGE PAR INJECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.03.2016 JP 2016060666**

(43) Date of publication of application:
**30.01.2019 Bulletin 2019/05**

(73) Proprietor: **Sumitomo Heavy Industries, Ltd.
Tokyo 141-6025 (JP)**

(72) Inventor: **ICHIHARA, Koichi
Yokosuka-shi
Kanagawa 237-8555 (JP)**

(74) Representative: **Louis Pöhlau Lohrentz
Patentanwälte
Postfach 30 55
90014 Nürnberg (DE)**

(56) References cited:
**DE-A1-102009 052 080      JP-A- H11 198 199
JP-A- 2010 111 019**

**Description**

Technical Field

The present invention relates to an injection molding machine.

Background Art

PTL 1 discloses an injection molding machine including a cylinder member, an injection member disposed so as to be able to advance and retreat in the cylinder member, an inj ection motor, a transmission shaft that is connected so as to be relatively rotatable with respect to the injection member and is provided with a rotation transmission unit to which rotation of the injection motor is transmitted, and a motion direction conversion unit that rotary motion into linear motion. A load meter is provided between the injection motor and the injection member, and the load meter detects injection pressure. PTL 2 discloses an injection molding machine which includes a screw, a driving electric motor which moves the screw, a transmission belt that transmits a driving force of the driving electric motor to the screw, a load cell, and a control device.

Citation List

Patent Literature

[PTL 1] Japanese Unexamined Patent Application Publication No. 11-198199
[PTL 2] German Unexamined Patent Application Publication No. 10 2009 052080

Summary of Invention

Technical Problem

In the related art, a load detector is provided in a transmission unit that transmits a driving force of a drive unit to a movable unit, and a load in a movement direction of the movable unit is obtained based on a detected value of the load detector. However, accuracy is low.
The present invention has been made in view of the above problem and has a main object to provide an injection molding machine in which it is possible to accurately obtain a load in a movement direction of a movable unit.

Solution to Problem

In order to solve the above problem, according to an aspect of the present invention, there is provided an injection molding machine including: a movable unit; a drive unit that moves the movable unit; a transmission unit that transmits a driving force of the drive unit to the movable unit; a load detector that is provided in the transmission unit and detects a load; and a load calculation unit that calculates a load in a movement direction of the movable unit, based on a detected value of the load detector, in which the transmission unit includes a spline unit having a spline nut and a spline shaft that are connected to each other so as to be slidable in the movement direction of the movable unit, and transmit rotation, and the load calculation unit calculates the load in the movement direction of the movable unit, based on the detected value of the load detector and sliding resistance of the spline unit.

Advantageous Effects of Invention

According to the aspect of the present invention, there is provided an injection molding machine in which it is possible to accurately obtain a load in a movement direction of a movable unit.

Brief Description of Drawings

FIG. 1 is a diagram showing an injection molding machine according to an embodiment.
FIG. 2 is a diagram showing a control system for a holding pressure process of the injection molding machine according to the embodiment.
FIG. 3 is a diagram showing a control system for a holding pressure process of an injection molding machine according to a modification example.

Description of Embodiments

Hereinafter, a mode for carrying out the present invention will be described with reference to the drawings. However, in each drawing, identical or corresponding configurations are denoted by identical or corresponding reference numerals, and description thereof is omitted.

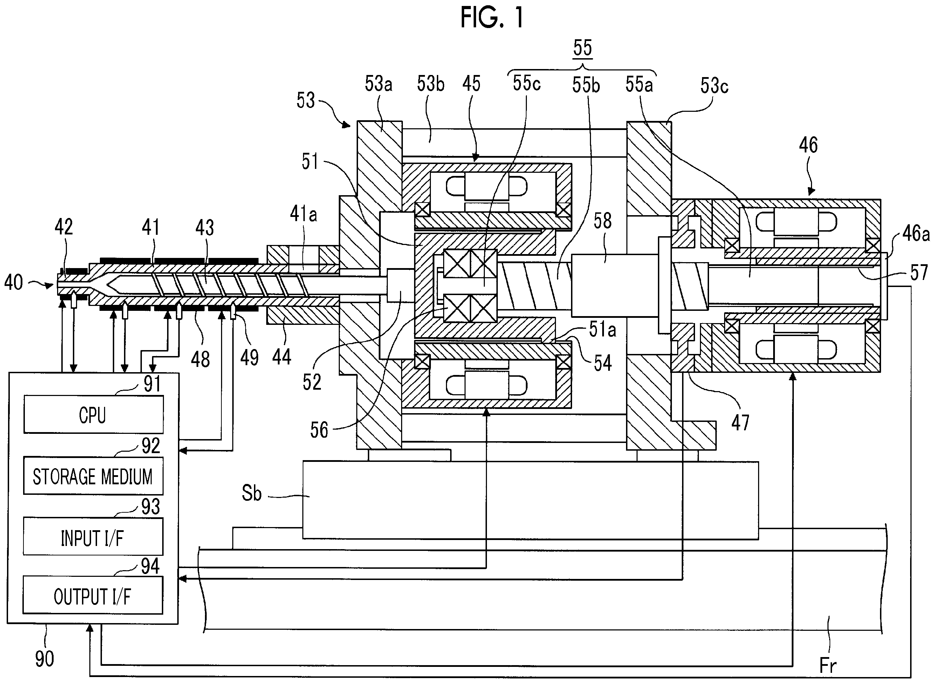

FIG. 1 is a diagram showing an injection molding machine according to an embodiment. The injection molding machine includes a frame Fr, an injection unit 40, and a controller 90. Hereinafter, a movement direction (a leftward direction in FIG. 1) of a screw 43 when performing filling will be described as being forward, and a movement direction (a rightward direction in FIG. 1) of the screw 43 when performing plasticizing will be described as being the backward.

The injection unit 40 is installed on a slide base Sb capable of advancing and retreating with respect to the frame Fr and is capable of advancing and retreating with respect to a mold unit. The injection unit 40 is brought into contact with the mold unit and fills a cavity in the mold unit with a molding material. A molding product is obtained by cooling and solidifying the molding material filled in the cavity.

The injection unit 40 includes, for example, a cylinder 41, a nozzle 42, the screw 43, a cooler 44, a plasticizing motor 45, an injection motor 46, a load detector 47, a heater 48, a temperature detector 49, and the like.

The cylinder 41 heats the molding material supplied from a feed port 41a to the interior thereof. The feed port 41a is formed in a rear portion of the cylinder 41. The cooler 44 such as a water-cooled cylinder is provided on the outer periphery of the rear portion of the cylinder 41. The heater 48 such as a band heater and the temperature detector 49 are provided on the outer periphery of the cylinder 41 in front of the cooler 44.

The cylinder 41 is divided into a plurality of zones in an axial direction (a right-left direction in FIG. 1) of the cylinder 41. The heater 48 and the temperature detector 49 are provided in each zone. The controller 90 controls the heater 48 such that an actually detected temperature of the temperature detector 49 reaches a setting temperature for each zone.

The nozzle 42 is provided at a front end portion of the cylinder 41 and is pressed against the mold unit. The heater 48 and the temperature detector 49 are provided on the outer periphery of the nozzle 42. The controller 90 controls the heater 48 such that an actually detected temperature of the nozzle 42 reaches a setting temperature.

The screw 43 is disposed so as to be rotatable and capable of advancing and retreating in the cylinder 41. If the screw 43 rotates, the molding material is fed forward along a spiral groove of the screw 43. The molding material is gradually melted by the heat from the cylinder 41 while being fed forward. The screw 43 retreats as a liquid molding material is fed forward of the screw 43 and accumulated in a front portion of the cylinder 41. Thereafter, if the screw 43 advances, the molding material in front of the screw 43 is injected from the nozzle 42 and filled into the mold unit.

The plasticizing motor 45 rotates the screw 43. The rotary motion of the plasticizing motor 45 is transmitted to a bearing holder 51 spline-connected to a rotor of the plasticizing motor 45 and is transmitted to the screw 43 through a coupling 52 which connects the bearing holder 51 and the screw 43.

A spline nut 54 is disposed on the plasticizing motor 45 side and a spline shaft 51a is disposed on the bearing holder 51 side. The spline nut 54 and the spline shaft 51a are connected to each other so as to be slidable in the axial direction, and transmit rotation.

Hereinafter, the spline nut 54 is also referred to as a plasticizing spline nut 54, and the spline shaft 51a is also referred to as a plasticizing spline shaft 51a. Further, a spline unit which is composed of the plasticizing spline nut 54 and the plasticizing spline shaft 51a is also referred to as a plasticizing spline.

The bearing holder 51 is disposed inside the rotor of the plasticizing motor 45. However, the bearing holder 51 may be disposed outside the rotor of the plasticizing motor 45. The plasticizing spline nut may be provided separately from the plasticizing motor 45. The rotary motion of the plasticizing motor 45 may be transmitted to the plasticizing spline nut through a belt, a pulley or the like and transmitted to the plasticizing spline shaft 51a.

The plasticizing motor 45 is fixed to an injection frame 53 which advances and retreats together with the slide base Sb. The injection frame 53 has a front support 53a, a rear support 53b, and a connecting rod 53c connecting the front support 53a and the rear support 53b. A stator of the plasticizing motor 45 is fixed to the front support 53a, and a stator of the injection motor 46 is fixed to the rear support 53b.

The injection motor 46 advances and retreats the screw 43. The rotary motion of the injection motor 46 is converted into the rotary and linear motion of a drive shaft 55 which is spline-connected to a rotor of the injection motor 46 and screwed to a ball screw nut 58 (described later), and converted to the linear motion of the bearing holder 51 which holds a bearing 56 rotatably supporting the drive shaft 55. The screw 43 advances and retreats as the bearing holder 51 advances and retreats.

A spline nut 57 is disposed on the injection motor 46 side and a spline shaft 55a is disposed on the drive shaft 55 side. The spline nut 57 and the spline shaft 55a are connected to each other so as to be slidable in the axial direction, and transmit rotation.

Hereinafter, the spline nut 57 is also referred to as an injection spline nut 57, and the spline shaft 55a is also referred to as an injection spline shaft 55a. Further, a spline unit which is composed of the injection spline nut 57 and the injection spline shaft 55a is also referred to as an injection spline.

The drive shaft 55 includes, in addition to the injection spline shaft 55a, a ball screw shaft 55b which is screwed to a ball screw nut 58 which is fixed to the rear support 53b, and a rotary shaft 55c which is rotatably supported by the bearing 56. The injection spline shaft 55a, the ball screw shaft 55b, and the rotary shaft 55c are arranged on the same straight line in this order toward the front side from the rear side.

The bearing holder 51 moves linearly as the drive shaft 55 performs rotary and linear motion. The bearing holder 51 and the plasticizing motor 45 are spline-connected to each other, and therefore, the plasticizing motor 45 does not advance and retreat when the bearing holder 51 advances and retreats. Since the plasticizing motor 45 is not included in an object to be driven by the injection motor 46, the inertia of the object to be driven by the injection motor 46 is small, so that the acceleration of the screw 43 at the time of starting of advance thereof is fast.

Further, the injection motor 46 may advance and retreat the plasticizing motor 45 together with the bearing holder 51 when the screw 43 advances and retreats. That is, the plasticizing motor 45 may be included in the object to be driven by the injection motor 46.

The load detector 47 is provided in a force transmission pathway between the injection motor 46 and the screw 43 and detects a load acting on the load detector 47. For example, the load detector 47 is mounted on the rear support 53b and the ball screw nut 58 and detects a load acting on the load detector 47. The position of the load detector 47 is not particularly limited.

The load detector 47 sends a signal indicating the detection result thereof to the controller 90. The detection result of the load detector 47 is used for controlling and monitoring pressure that the screw 43 receives from the molding material, back-pressure on the screw 43, pressure acting on the molding material from the screw 43, and the like.

The controller 90 includes a central processing unit (CPU) 91, a storage medium 92 such as a memory, an input interface 93, and an output interface 94, as shown in FIG. 1. The controller 90 performs various kinds of control by causing the CPU 91 to execute a program stored in the storage medium 92. Further, the controller 90 receives a signal from the outside through the input interface 93 and transmits a signal to the outside through the output interface 94. The controller 90 controls a filling process, a holding pressure process, a plasticizing process, and the like.

In the filling process, the injection motor 46 is driven to advance the screw 43 at a setting speed and fill the cavity in the mold unit with the liquid molding material accumulated in front of the screw 43. The position or the speed of the screw 43 is detected by using, for example, an encoder 46a of the injection motor 46. The encoder 46a detects the rotation of the injection motor 46 and sends a signal indicating the detection result to the controller 90. If the position of the screw 43 reaches the setting position, switching from the filling process to the holding pressure process (so-called V/P switching) is performed. The setting speed of the screw 43 may be changed according to the position of the screw 43, a time, or the like.

Further, after the position of the screw 43 reaches the setting position in the filling process, the screw 43 is temporarily stopped at the setting position, and thereafter, the V/P switching may be performed. Instead of stopping the screw 43 immediately before the V/P switching, the screw 43 may be advanced at a very slow speed or retreated at a slow speed.

In the holding pressure process, the injection motor 46 is driven to push the screw 43 forward with a setting pressure and apply pressure to the molding material filled in the cavity in the mold unit. A shortage of the molding material due to cooling contraction can be replenished. The pressure of the molding material is detected by using the load detector 47, for example.

In the holding pressure process, the molding material in the cavity is gradually cooled, and when the holding pressure process has been completed, the inlet of the cavity is closed with s solidified molding material. This state is called a gate seal, and a backflow of the molding material from the cavity is prevented. After the holding pressure process, a cooling process is started. In the cooling process, solidification of the molding material in the cavity is performed. In order to shorten a molding cycle, the plasticizing process may be performed during the cooling process.

In the plasticizing process, the plasticizing motor 45 is driven to rotate the screw 43 at a setting rotational frequency and feed the molding material forward along the spiral groove of the screw 43. According to this, the molding material is gradually melted. The screw 43 retreats as a liquid molding material is fed forward of the screw 43 and accumulated in the front portion of the cylinder 41. The rotational frequency of the screw 43 is detected using an encoder of the plasticizing motor 45, for example. The encoder sends a signal indicating the detection result thereof to the controller 90.

In the plasticizing process, in order to limit the sudden retreat of the screw 43, the injection motor 46 may be driven to apply a setting back-pressure to the screw 43. The back-pressure on the screw 43 is detected by using, for example, the load detector 47. If the screw 43 retreats to a setting position and a predetermined amount of molding material is accumulated in front of the screw 43, the plasticizing process is ended.

Further, the injection unit 40 of this embodiment is an in-line screw type, but may be a pre-plasticating type. A pre-plasticating type injection unit feeds a molding material melted in a plasticizing cylinder to an injection cylinder and injects the molding material from the injection cylinder into a mold unit. A screw is disposed in the plasticizing cylinder so as to be rotatable or to be rotatable and be able to advance and retreat, and a plunger is disposed in the injection cylinder so as to be able to advance and retreat.

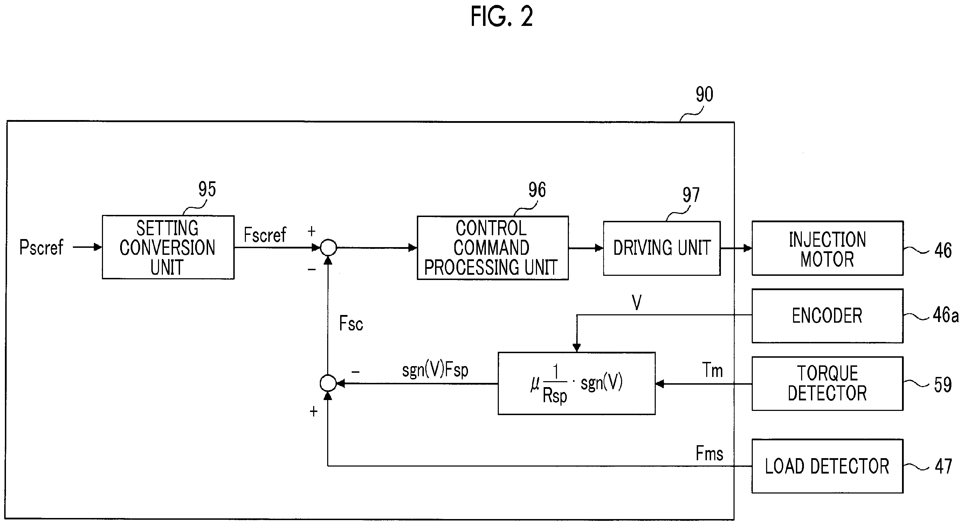

FIG. 2 is a diagram showing a control system for the holding pressure process of the injection molding machine according to the embodiment. In the holding pressure process, setting Pscref of the pressure acting on the molding material from the screw 43 is input to a setting conversion unit 95. In the holding pressure process, the pressure acting on the molding material from the screw 43 and the pressure acting on the screw 43 from the molding material are substantially the same. The pressure setting Pscref may be constant or may change according to time.

The controller 90 includes the setting conversion unit 95 that converts the pressure setting Pscref into load setting Fscref, a control command processing unit 96 that creates a control command, based on the load setting Fscref and a load actual result Fsc, a driving unit 97 that supplies an alternating current to the injection motor 46 according to a control command.

The setting conversion unit 95 converts the pressure setting Pscref into the load setting Fscref. The load setting Fscref is obtained, for example, as the product of the pressure setting Pscref and the cross-sectional area of the screw 43. In the holding pressure process, the load acting on the molding material from the screw 43 and the load acting on the screw 43 from the molding material are substantially the same.

The control command processing unit 96 creates a control command, based on the load setting Fscref and the load actual result Fsc. For example, the control command processing unit 96 creates an output wave of the driving unit 97 such that the deviation between the load setting Fscref and the load actual result Fsc becomes zero. For the creation of the output wave of the driving unit 97, for example, PI processing, PID processing, or the like is used. The control command processing unit 96 creates a pulse width modulation (PWM) signal by comparing the output wave of the driving unit 97 with a carrier wave.

The driving unit 97 is composed of an inverter that converts direct-current power into alternating-current power, and the like. The inverter has a plurality of legs composed of, for example, two switching elements. A diode is connected in anti-parallel to each switching element. The diode may be incorporated in each switching element. The inverter performs switching according to the PWM signal from the control command processing unit 96 and supplies alternating-current power to the injection motor 46. A method of controlling the driving unit 97 is not limited to PWM.

Incidentally, in the holding pressure process, a load acts on the screw 43 from the molding material. This load is transmitted to the load detector 47 through the drive shaft 55 and the like. Further, in the holding pressure process, the injection motor 46 is driven to rotate the drive shaft 55, and therefore, the injection spline shaft 55a and the injection spline nut 57 relatively move in a front-back direction in a state of being pressed against each other in a tangential direction, and thus sliding resistance Fsp is generated. This sliding resistance is also transmitted to the load detector 47. Therefore, a detected value Fms of the load detector 47 includes not only the load actual result Fsc acting on the screw 43 but also the sliding resistance Fsp as an error.

Therefore, the controller 90 obtains the load actual result Fsc, based on the detected value Fms of the load detector 47 and the sliding resistance Fsp of the injection spline, in the holding pressure process. For example, the controller 90 obtains the load actual result Fsc by using the following expression (1). The following expression (1) is a formula of equilibrium of forces.

[Expression 1]

$$Fms = Fsc + \mathrm{sgn}(V)Fsp \qquad \cdots (1)$$

In the above expression (1), V represents the speed of the screw 43, V being positive indicates the advance of the screw 43, and V being negative indicates the retreat of the screw 43. Further, in the above expression (1), sgn(V) is a sign function of V, and in a case where V is positive, sgn(V) becomes 1, and in a case where V is negative, sgn(V) becomes -1 and in a case where V is zero, sgn(V) becomes zero. The reason why the sign function of V is multiplied by the sliding resistance Fsp (Fsp>0) is because the direction of the sliding resistance Fsp varies according to the movement direction of the screw 43. The direction of the sliding resistance Fsp is the opposite direction to the movement direction of the screw 43.

The screw 43 advances or retreats in the holding pressure process. When the screw 43 advances, the direction of the sliding resistance Fsp is a rearward direction, and therefore, the load actual result Fsc is obtained by subtracting the sliding resistance Fsp from the detected value Fms of the load detector 47. On the other hand, when the screw 43 retreats, the direction of the sliding resistance Fsp is a forward direction, and therefore, the load actual result Fsc is obtained by adding the sliding resistance Fsp to the detected value Fms of the load detector 47. Since addition and subtraction are switched according to the movement direction of the screw 43, it is possible to accurately obtain the load actual result Fsc.

The sliding resistance Fsp is obtained as the product of a coefficient of friction μ and a tangential force. The coefficient of friction μ is a constant and is obtained in advance by a test or the like. The larger the tangential force is, the more strongly the injection spline shaft 55a and the injection spline nut 57 are pressed against each other in the tangential direction, so that the sliding resistance Fsp in the front-back direction increases. The tangential force is obtained by dividing torque Tm of the injection motor 46 by an effective radius Rsp of the injection spline shaft 55a. Therefore, the sliding resistance Fsp can be obtained from the following expression (2).

[Expression 2]

$$Fsp = \mu \frac{1}{Rsp} T_m \qquad \cdots (2)$$

The torque Tm of the injection motor 46 is detected by using a torque detector 59, for example. The torque detector 59 detects the torque Tm of the injection motor 46 by detecting the electric current of the injection motor 46. The torque Tm of the injection motor 46 may be estimated based on the control command which is created by the control command processing unit 96, or the like.

The torque Tm of the injection motor 46 can also be calculated from the following expression (3) by using the detected value Fms of the load detector 47.

[Expression 3]

$$T_m = \frac{1}{\eta} \frac{L_d}{2\pi} Fms \qquad \cdots (3)$$

In the above expression (3), η represents the efficiency of a ball screw, and $L_d$ represents the lead of the ball screw. The ball screw is composed of the ball screw shaft 55b, the ball screw nut 58, and the like. The efficiency η is the ratio of an output to an input. The lead $L_d$ is a movement distance per one rotation.

The following expression (4) is obtained by substituting the above expression (3) into the above expression (2).

[Expression 4]

$$Fsp = \mu \frac{1}{Rsp} \frac{1}{\eta} \frac{L_d}{2\pi} Fms \qquad \cdots (4)$$

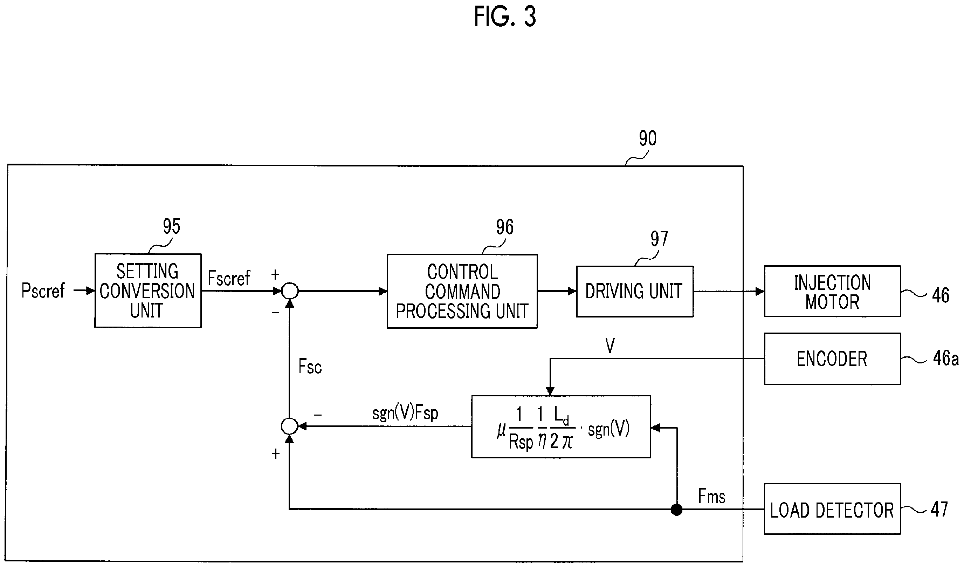

It is also possible to obtain the sliding resistance Fsp by using the above expression (4). Further, the controller 90 shown in FIG. 3 calculates the sliding resistance Fsp by using the above expression (4), and the controller 90 shown in FIG. 2 calculates the sliding resistance Fsp by using the above expression (2).

As described above, the controller 90 obtains the load actual result Fsc, based on the detected value Fms of the load detector 47 and the sliding resistance Fsp of the injection spline, in the holding pressure process. Therefore, the detection accuracy of the load actual result Fsc can be improved, and thus the pressure of the molding material can be accurately controlled in the holding pressure process.

Similarly, the controller 90 may obtain the load actual result Fsc, based on the detected value Fms of the load detector 47 and the sliding resistance Fsp of the injection spline, in the filling process. Therefore, the detection accuracy of the load actual result Fsc can be improved, the injection pressure of the screw 43 can be accurately monitored in the filling process, and thus abnormality can be detected accurately.

In the holding pressure process or the filling process, compared to the plasticizing process, the torque Tm of the injection motor 46 is large and the tangential force is large, and therefore, the sliding resistance Fsp is large. Therefore, in the holding pressure process or the filling process, the effect of obtaining the sliding resistance Fsp is remarkably obtained.

Further, the controller 90 may obtain the load actual result Fsc, based on the detected value Fms of the load detector 47 and the sliding resistance Fsp of the injection spline, in the plasticizing process. In this way, the detection accuracy of the load actual result Fsc can be improved, and thus the back-pressure of the screw 43 can be accurately controlled in the plasticizing process.

In the plasticizing process, unlike the holding pressure process or the filling process, the plasticizing motor 45 is driven to rotate the bearing holder 51. For this reason, the plasticizing spline nut 54 and the plasticizing spline shaft 51a relatively move in the front-back direction in a state of being pressed against each other in the tangential direction, and thus the sliding resistance is generated.

Therefore, the controller 90 may obtain the load actual result Fsc, based on the detected value Fms of the load detector 47, the sliding resistance Fsp of the injection spline, and the sliding resistance of the plasticizing spline, in the plasticizing process. The sliding resistance of the plasticizing spline can be obtained in the same way as the sliding resistance Fsp of the injection spline.

Further, the controller 90 may obtain the load actual result Fsc, based on the detected value Fms of the load detector 47, the sliding resistance Fsp of the injection spline, and the sliding resistance of the plasticizing spline, in the holding pressure process or the filling process. However, in the holding pressure process or the filling process, the sliding resistance of the plasticizing spline is small, and therefore, it may be ignored, and only the sliding resistance of the injection spline may be taken into consideration.

In this embodiment, the load detector 47 corresponds to a load detector stated in the claims. The load detector is provided in a transmission unit that transmits a driving force of a drive unit to a movable unit, and detects a load acting on the load detector. In this embodiment, the screw 43 corresponds to the movable unit, the injection motor 46 or the plasticizing motor 45 corresponds to the drive unit, and the injection spline or the plasticizing spline corresponds to the transmission unit. Further, in this embodiment, the controller 90 corresponds to a load calculation unit stated in the claims. The load calculation unit may be provided separately from the controller 90.

The embodiment or the like of the injection molding machine has been described above. However, the present invention is not limited to the above embodiment or the like, and various modifications and improvements can be made within the scope of the present invention stated in the claims.

For example, in the embodiment described above, the injection spline nut 57 is disposed on the injection motor 46 side and the injection spline shaft 55a is disposed on the drive shaft 55 side. However, the disposition may be reversed. That is, a configuration may be made in which the injection spline shaft is disposed on the injection motor 46 side and the injection spline nut is disposed on the drive shaft 55 side. In this case, if the injection motor 46 is driven, the injection spline shaft performs rotary motion and the injection spline nut performs rotary and linear motion.

Similarly, in the embodiment described above, the plasticizing spline nut 54 is disposed on the plasticizing motor 45 side and the plasticizing spline shaft 51a is disposed on the bearing holder 51 side. However, the disposition may be reversed. That is, a configuration may be made in which the plasticizing spline shaft is disposed on the plasticizing motor 45 side and the plasticizing spline nut is disposed on the bearing holder 51 side. In this case, if the plasticizing motor 45 is driven, the spline shaft performs rotary motion and the spline nut performs rotary and linear motion.

In the embodiment described above, the present invention is applied to the injection unit 40. However, the present invention is also applicable to a mold clamping unit that performs mold closing, mold clamping, and mold closing of a mold unit, an ejector unit that ejects a molding product from the mold unit, or the like.

Reference Signs List

| | |
|---|---|
| 40: | injection unit |
| 41: | cylinder |
| 42: | nozzle |
| 43: | screw |
| 45: | plasticizing motor |
| 46: | injection motor |
| 47: | load detector |
| 51: | bearing holder |
| 51a: | plasticizing spline shaft |
| 54: | plasticizing spline nut |
| 55: | drive shaft |
| 55a: | injection spline shaft |
| 57: | injection spline nut |
| 90: | controller |

**Claims**

**1.** An injection molding machine comprising:

a movable unit (43);
a drive unit (46) that moves the movable unit;
a transmission unit that transmits a driving force of the drive unit to the movable unit;
a load detector (47) that is provided in the transmission unit and detects a load; and
a load calculation unit (90) that calculates a load in a movement direction of the movable unit, based on a detected value of the load detector, **characterized in that**
the transmission unit includes a spline unit having a spline nut (54, 57) and a spline shaft (51a, 55a) that are connected to each other so as to be slidable in the movement direction of the movable unit, and transmit rotation, and
the load calculation unit is configured to calculate the load in the movement direction of the movable unit, based on the detected value of the load detector and sliding resistance of the spline unit.

2. The injection molding machine according to claim 1, wherein the movable unit (43) is made to be able to advance and retreat in a cylinder (41) to which a molding material is supplied, and the drive unit is configured to advance the movable unit to feed the molding material in the cylinder.

3. The injection molding machine according to claim 1 or 2, wherein the spline unit includes a spline nut which is configured to perform rotary motion with the driving force of the drive unit, and a spline shaft which is configured to perform rotary and linear motion according to the rotary motion of the spline nut.

4. The injection molding machine according to claim 1 or 2, wherein the spline unit includes a spline shaft which is configured to perform rotary motion with the driving force of the drive unit, and a spline nut which is configured to perform rotary and linear motion according to the rotary motion of the spline shaft.

**Patentansprüche**

1. Spritzgießmaschine, umfassend:

eine bewegliche Einheit (43);
eine Antriebseinheit (46), welche die bewegliche Einheit bewegt;
eine Übertragungseinheit, die eine Antriebskraft der Antriebseinheit zu der beweglichen Einheit überträgt;
einen Lastdetektor (47), der in der Übertragungseinheit angeordnet ist und eine Last detektiert; und
eine Lastberechnungseinheit (90), die eine Last in einer Bewegungsrichtung der beweglichen Einheit auf der Basis eines detektierten Wertes des Lastdetektors berechnet, **dadurch gekennzeichnet, dass**
die Übertragungseinheit eine Keilwelleneinheit enthält, die eine Keilwellenmutter (54, 57) und eine Keilwelle (51a, 55a) aufweist, die so miteinander verbunden sind, dass sie in der Bewegungsrichtung der beweglichen Einheit verschiebbar sind und eine Drehung übertragen, und
die Lastberechnungseinheit so konfiguriert ist, um die Last in der Bewegungsrichtung der beweglichen Einheit auf der Basis des detektierten Wertes des Lastdetektors und des Gleitwiderstands der Keilwelleneinheit zu berechnen.

2. Spritzgießmaschine nach Anspruch 1, wobei die bewegliche Einheit (43) so ausgebildet ist, dass sie sich in einem Zylinder (41), dem ein Formmaterial zugeführt wird, vor und zurück bewegen kann, und
die Antriebseinheit konfiguriert ist, um die bewegliche Einheit vorzubewegen, um das Formmaterial in den Zylinder einzuführen.

3. Spritzgießmaschine nach Anspruch 1 oder 2, wobei die Keilwelleneinheit eine Keilwellenmutter enthält, die konfiguriert ist, um eine Drehbewegung mit der Antriebskraft der Antriebseinheit auszuführen, und eine Keilwelle enthält, die konfiguriert ist, um eine Dreh- und Linearbewegung gemäß der Drehbewegung der Keilwellenmutter auszuführen.

4. Spritzgießmaschine nach Anspruch 1 oder 2, wobei die Keilwelleneinheit eine Keilwelle enthält, die konfiguriert ist, um eine Drehbewegung mit der Antriebskraft der Antriebseinheit auszuführen, und eine Keilwellenmutter enthält, die konfiguriert ist, um eine Dreh- und Linearbewegung entsprechend der Drehbewegung der Keilwelle auszuführen.

**Revendications**

1. Une machine de moulage par injection comprenant :

   une unité mobile (43) ;
   une unité d'entraînement (46) qui déplace l'unité mobile ;
   une unité de transmission qui transmet une force d'entraînement de l'unité d'entraînement à l'unité mobile ;
   un détecteur de charge (47) qui est prévu dans l'unité de transmission et détecte une charge ; et
   une unité de calcul de charge (90) qui calcule une charge dans une direction de mouvement de l'unité mobile, sur la base d'une valeur détectée du détecteur de charge, **caractérisé en ce que**
   l'unité de transmission comprend une unité de cannelure qui possède un écrou cannelé (54, 57) et un arbre cannelé (51a, 55a) qui sont reliés l'un à l'autre de façon à pouvoir coulisser dans la direction de mouvement de l'unité mobile, et à transmettre une rotation, et
   l'unité de calcul de charge est configurée pour calculer la charge dans la direction de mouvement de l'unité mobile, sur la base de la valeur détectée du détecteur de charge et de la résistance au glissement de l'unité de cannelure.

2. La machine de moulage par injection selon la revendication 1, dans laquelle l'unité mobile (43) est conçue pour pouvoir avancer et reculer dans un cylindre (41) auquel un matériau de moulage est fourni, et l'unité d'entraînement est configurée pour faire avancer l'unité mobile afin de fournir le matériau de moulage au cylindre.

3. La machine de moulage par injection selon la revendication 1 ou 2, dans laquelle l'unité de cannelure comprend un écrou cannelé qui est configuré pour effectuer un mouvement de rotation avec la force d'entraînement de l'unité d'entraînement, et un arbre cannelé qui est configuré pour effectuer un mouvement rotatif et linéaire selon le mouvement de rotation de l'écrou cannelé.

4. La machine de moulage par injection selon la revendication 1 ou 2, dans laquelle l'unité de cannelure comprend un arbre cannelé qui est configuré pour effectuer un mouvement de rotation avec la force d'entraînement de l'unité d'entraînement, et un écrou cannelé qui est configuré pour effectuer un mouvement rotatif et linéaire selon le mouvement de rotation de l'arbre cannelé.

# FIG. 1

# FIG. 2

EP 3 434 439 B1

## FIG. 3

EP 3 434 439 B1

**EP 3 434 439 B1**

## REFERENCES CITED IN THE DESCRIPTION

### Patent documents cited in the description

- JP 11198199 A
- DE 102009052080